# EUROPEAN PATENT APPLICATION

(11) **EP 1 227 657 A2**
(43) Date of publication of application: **31.07.2002**
(21) Application number: 02000969.2
(22) Date of filing: 16.01.2002
(51) Int. Cl.: H04N 1/327

(54) **A communication terminal device**

(30) Priority: 22.01.2001 JP 2001013479
(71) Applicant: Murata Kikai Kabushiki Kaisha, Minami-ku, Kyoto-shi, Kyoto 601 (JP)
(72) Inventor: Murata, Yoshinori, Tenri-shi, Nara (JP)
(74) Representative: Liedl, Christine

(57) **Abstract**

A communication terminal device transmits an ANSam signal (step S2). When the device does not detect a CM signal within a prescribed period (NO in step S3 and YES in step S4), the device transmits a DIS signal with a bit indicating that the communication procedure of the V. 8 mode can be carried out (step S5). Then, when receiving a CI signal (YES in step S6), the device transmits an ANSam signal (step S21 in Figure 3), and afterwards if a CM signal cannot be detected (NO in step 22), and the number of detected CI signals is a prescribed number or more (YES in step S25), the device transmits a DIS signal without a bit indicating that the communication procedure in accordance with V. 8 mode can be carried out (step S26).

## Description

This application claims priority of Japanese Patent Application No. 2001-13479 filed in JPO on January 22, 2001, the entire disclosure of which is incorporated herein by reference.

The present invention relates to a communication terminal device such as a facsimile machine with a facsimile communication function in accordance with a V. 8 mode of ITU-T (International Telecommunication Union) Recommendation, and a storing medium storing a communication control program of the same.

According to ITU-T Recommendation, a standard of two lined type full duplex modem exceeding 14.4 kbps and lower than, or equal to, 28.8 kbps is recommended as V. 34. In addition, for the standard to apply V. 34 to the communication procedure of the facsimile machine, ITU-T Recommendation T. 30 ANNEX F is defined.

According to ITU-T Recommendation T. 30 ANNEX F, the facsimile machine which received an incoming call transmits an ANSam (modified answer tone) signal to the facsimile machine of the other end for a prescribed period of time, and when the communication procedure in accordance with the ITU-T Recommendation V. 8 is not achieved, after a prescribed period of silent time, an NSF (Nonstandard Facilities) signal and a DIS (Digital Identification Signal) signal are transmitted. The DIS signal includes information indicating whether or not the facsimile machine has the ability to communicate in accordance with the communication procedure defined in the ITU-T Recommendation V. 8. Moreover, the facsimile machine of the transmitting side which received the DIS signal judges whether or not the facsimile machine of the receiving side has the ability of the V. 8 mode on the basis of the DIS signal, and when it is judged that the facsimile machine of the receiving side has the ability of the V. 8 mode, a CI (Call Indicator) signal is transmitted. The facsimile machine which received the CI signal transmits an ANSam signal and then judges whether or not the communication can be carried out in accordance with the communication procedure defined in ITU-T Recommendation V. 34. When it is judged that the communication can be carried out in accordance with the communication procedure defined in ITU-T Recommendation V. 34, between respective facsimile machines, the procedure proceeds to communication in accordance with the communication procedure defined in ITU-T Recommendation V. 34.

As in the manner stated above, according to the facsimile machine with a facsimile communication function in accordance with the V. 8 mode of ITU-T Recommendation, when the ANSam signal is transmitted and a CM (Call Menu) signal cannot be detected within a prescribed period of time, the DIS signal to which a so-called V. 8 bit indicating that the communication procedure of V. 8 mode can be carried out is set is transmitted. When a CI signal is received, the facsimile machine transmits an ANSam signal. However, when the CI signal is detected without CM signal being detected (for example, in the case where the facsimile machine of the other end failed to detect the ANSam signal), there was a problem in that due to the time limit, a communication error occurred.

The present invention was made in consideration to the aforementioned problems, and it is thus an object of the present invention to provide a communication terminal device such as a facsimile machine with a facsimile communication function in accordance with the V. 8 mode of ITU-T Recommendation. In other words, this communication terminal device is capable of continuing the facsimile communication by avoiding the communication error even when the facsimile communication in accordance with the communication procedure of the V. 8 mode cannot be continued. It is another object of the present invention to provide a storing medium storing the communication control program of such a communication terminal device.

According to an embodiment of the present invention, the communication terminal device which has a facsimile communication function in accordance with the V. 8 mode of ITU-T Recommendation comprises communication control means. This communication control means causes transmission of a DIS signal without setting a bit indicating that the communication procedure in accordance with the V. 8 mode can be carried out, in the case where when an ANSam signal is transmitted and a CM signal cannot be detected within a prescribed period of time and a CI signal is received after transmitting a DIS signal to which a bit indicating that the communication procedure in accordance with the V. 8 method can be carried out is set, an ANSam signal is transmitted and a CI signal is detected a prescribed number of times without detecting the CM signal.

Moreover, according to this communication terminal device, the communication control means preferably causes transmission of a DIS signal to which a bit indicating that the communication procedure in accordance with V. 8 mode can be carried out is set, in the case other than the case in which a CI signal is detected a prescribed number of times or more times when a CI signal is received, an ANSam signal is transmitted and a CM signal is not detected.

Furthermore, the storing medium stores a communication control program according to the embodiment of the present invention. This communication program stored in the storing medium includes a process of the above-mentioned communication control means.

These and other objects, features and advantages of the present invention will become more apparent upon reading of the following detailed description and drawings.

Figure 1 is a block diagram showing structure of a facsimile machine 20 with a facsimile communication function in accordance with a V. 8 mode of ITU-T Recommendation, according to an embodiment of the present invention;

Figure 2 is a flow chart showing a first part of a facsimile incoming call process which is carried out by a main control unit 1 of the facsimile machine 20 shown in Figure 1; and

Figure 3 is a flow chart showing a second part of the facsimile incoming call process which is carried out by the main control unit 1 of the facsimile machine 20 shown in Figure 1.

An embodiment of the present invention will now be described in reference to the accompanying drawings.

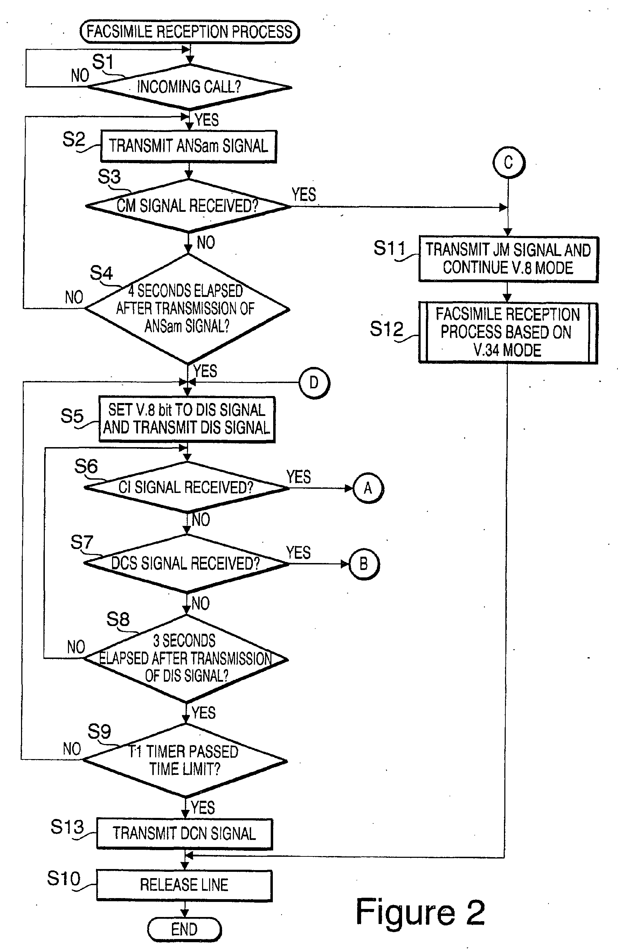

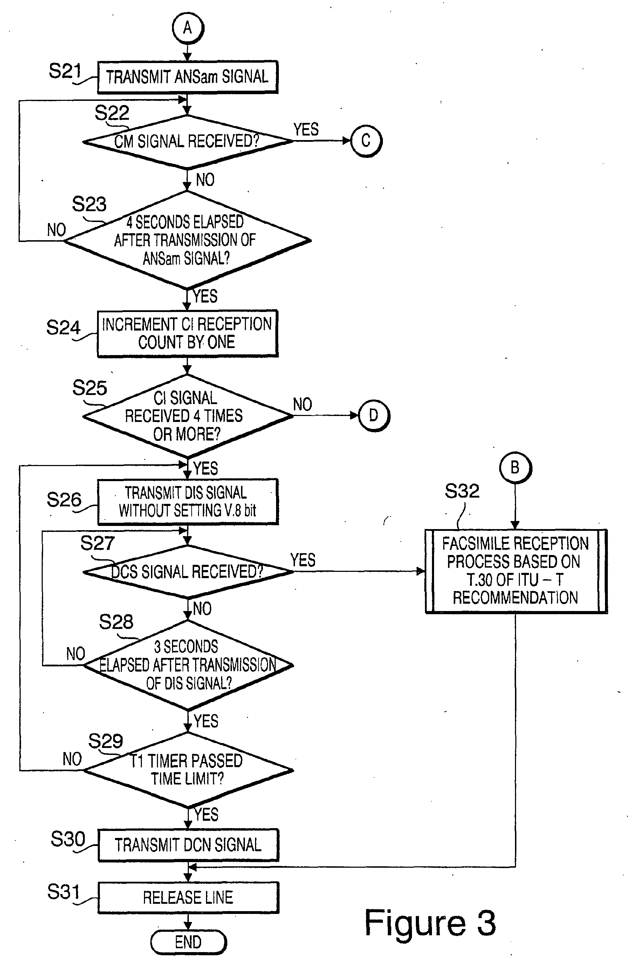

A facsimile machine 20 according to the embodiment of the present invention is a facsimile machine with a facsimile communication function in accordance with a V. 8 mode, a V. 34 mode and T. 30 of ITU-T Recommendation. When the facsimile machine 20 transmits an ANSam signal (step 2 in Figure 2), and cannot detect a CM signal within a prescribed period of time (NO in step 3 and YES in step 4), a main control unit 1 of the facsimile machine 20 causes the facsimile machine 20 to transmit a DIS signal to which a bit indicating that a communication procedure in accordance with the V. 8 mode can be carried out is set (step 5). Next, when the facsimile machine 20 receives a CI signal (YES in step 6), then transmits an ANSam signal (step 21 in Figure 3), and detects a CI signal a prescribed number of times or more times (Yes in step 25) without detecting a CM signal within a prescribed period of time (NO in step 22 and Yes in step 23), the main control unit 1 causes the facsimile machine 20 to transmit a DIS signal to which a bit indicating that the communication procedure in accordance with the V. 8 mode can be carried out is not set (step S26).

Moreover, the main control unit 1 causes the facsimile machine 20 to transmit a DIS signal (step S5 in Figure 2) to which a bit indicating that the communication procedure in accordance with the V. 8 mode can be carried out is set, in the case (NO in step 25) other than the case where the facsimile machine 20 detects a CI signal a prescribed number of times or more times when the facsimile machine 20 receives a CI signal (Yes in step 6 of Figure 2), transmits an ANSam signal (step 21 in Figure 3), and does not detect a CM signal within a prescribed period of time (NO in step 22 and YES in step 23).

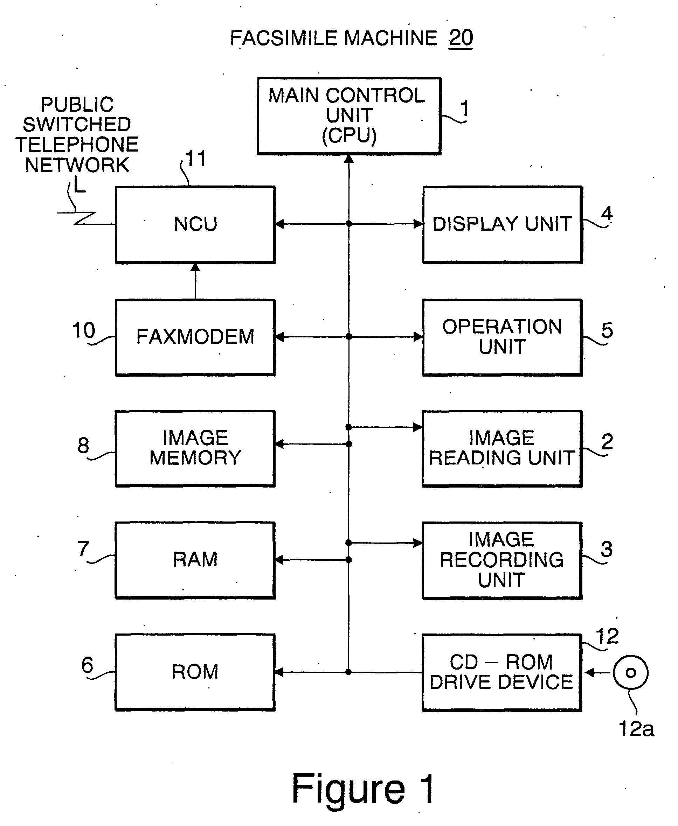

Referring to Figure 1, the facsimile machine 20 possesses a facsimile communication function such as the facsimile communication function in accordance with the V. 8 mode of ITU-T Recommendation, along with a facsimile communication function of a conventional G3 method and so on. Specifically, the main control unit 1 is configured to include a CPU (Central Processing Unit), controls each hardware unit to be mentioned below which is connected to the main control unit 1 via a bus 13, and carries out functions of various kinds of software to be mentioned later on. An image reading unit 2 reads a document or various images by a scanner using a CCD (Charge Coupled Device) or the like, and outputs dotted image data converted into a binary of black and white. An image recording unit 3 is an electrophotographic type of printing machine or the like, and prints, as hard copy, image data received from the other facsimile machine by facsimile communication. A display unit 4 is a displaying device such as a LCD (Liquid Crystal Display) or a CRT (Cathode Ray Tube) display, and displays the operational condition of the facsimile machine 20, the image data of the document to be transmitted which may be an image read by the reading unit 2, and/or the received image data.

An operation unit 5 includes character keys necessary for operating the facsimile machine 20, a ten-key numeric keypad for dialing, a speed dialing key, a one-touch dial key, and/or various kinds of function keys. Further, the display 4 may be configured to adopt a touch panel method so that the touch panel of the display 4 can be substituted for a part of or all of the various keys of the operation unit 5.

A ROM (Read Only Memory) 6 stores programs of various software in advance which are necessary for the operation of the facsimile machine 20 and are carried out by the main control unit 1. The programs include programs of at least the facsimile incoming call processes shown in Figure 2 and Figure 3. The RAM (Random Access Memory) 7 is configured to include SRAM (Static RAM), a flash memory or the like, is used as a working area of the main control unit 1, and stores temporary data which is generated when the program is carried out. Furthermore, when the flash memory is used for the RAM 7, even in the case where the power is lost due to power failure or moving of the device for example, the contents of the data are prevented from being lost. An image memory 8 is configured to include a DRAM or the like, and stores the image data to be transmitted or the received image data. In addition, the RAM 7 and the image memory 8 may be constructed as a hard disk memory.

A faxmodem 10 is connected to a public switched telephone network L, and is a modem possessing a function of a faxmodem for general facsimile communication. Moreover, the faxmodem 10 demodulates the data of the caller telephone number information which is received as a FSK (Frequency Shift Keying) signal, and outputs this data to the main control unit 1. An NCU (Network Control Unit) 11 carries out operations of releasing and closing of a direct current loop of an analogue public switched telephone network L, and is a hardware circuit having an automatic dialing function. In addition to that, the NCU 11 connects the faxmodem 10 to the public switched telephone network L according to necessity. The NCU 11 is capable of carrying out detection of the ID reception terminal startup signal of the caller telephone number notification service and the general telephone calling signal, along with transmission of the first response signal and the second response signal of the caller telephone number notification service according to necessity. Further, the NCU 11 may be connected to a digital line (for example, an ISDN line) of a baseband transmitting method via a designated terminal adapter and a DSU (Digital Service Unit).

A CD-ROM drive device 12 also may be connected to the bus 13. The CD-ROM drive device 12 may be configured to execute the communication control program by inserting a CD-ROM 12a which stores the communication control program including the facsimile incoming call processes shown in Figure 2 and Figure 3 into the CD-ROM drive device 12 and loading the communication control program stored in the CD-ROM 12a onto the RAM 7 or the like. The CD-ROM 12a is not limited to this, and may be replaced with a computer readable storing medium such as an optical disk (for example, a CD-R, a CD-RW, a DVD), or a floppy disk. In this case, a drive device corresponding to each storing medium can be connected to the bus 13.

The facsimile machine 20 of the this embodiment, which is constructed in the manner stated above, possesses the facsimile communication following the V. 8 mode of ITU-T Recommendation, in addition to the facsimile communication function of the normal G3 method or the like. According to the facsimile communication function, the dotted image data read by the image reading unit 2 is encrypted by software following the encrypting method of MH (Modified Huffman), MR (Modified Read), MMR (Modified Modified Read) or the like which are defined in the standard of the facsimile communication. Then, the encrypted dotted image data is transmitted to the facsimile machine of the other end. In the meantime, the encrypted data received from the facsimile machine of the other end is decrypted into image data by the software and is output, as hardcopy, from the image recording unit 3. Additionally, the image memory 8 stores the image data if necessary, and on the other hand, outputs the stored image data if necessary.

Furthermore, the communication procedure of the V. 34 mode and the V. 8 mode, which can perform data communication at a high speed such as the facsimile communication, will now be described. When carrying out the data communication by the communication terminal device such as a facsimile machine, a modem of a half duplex method following the communication procedure of the V. 17 mode of ITU-T Recommendation may be used. Such data communication is carried out by following the procedure defined in ITU-T Recommendation T. 30 which is also the facsimile communication procedure of the G3 standard. Moreover, the ultra-high-speed communication procedure whose maximum transmitting speed is 33.6 kbps according to ITU-T Recommendation V. 34 (hereafter referred to as the "communication procedure of the V. 34 mode") also has been made into practical use. In addition, according to the communication procedure of the V. 34 mode, at the start time of the communication and in the state where the communication is being carried out, the communication speed can be specified at the receiving side in accordance with the network condition at the time being, specifically S/N (electric power ratio of a signal to noise), and a bandwidth. The transmitting side changes the communication speed so that the transmission is carried out at a communication speed specified by the receiving side in such a manner. Further, when carrying out the data communication by the communication procedure of the V. 34 mode, the procedure is carried out by the communication procedure of the V. 8 mode in the same manner, and thereby the actual communication speed is determined.

The faxmodem 10 used in this embodiment is a modem capable of carrying out the communication procedure of the V. 8 mode and the V. 34 mode. Moreover, the faxmodem 10 is capable of changing the communication speed while the communication is in process, and also capable of monitoring, from the outside, the condition of the communication line at the time being, specifically the data of S/N and the bandwidth, as a status. This condition of the communication line can be monitored from the signal received from the other end of the communication. In other words, between the devices of the transmitting side and the receiving side, a line probing process is carried out, and as a result of such a process, the S/N and the bandwidth of the network at the time being are output as a status from the faxmodem 10, and the main control unit 1 reads this information and carries out a process in accordance with the read information.

In step S1 shown in Figure 2, first, it is judged whether or not a call is received, and when NO is selected, the process of step S1 is repeated, and when YES is selected, in step S2, the facsimile machine 20 transmits an ANSam signal. In step S3, it is judged whether or not the facsimile machine 20 receives a CM signal, and when YES is selected, the procedure proceeds to step S11. On the other hand, when NO is selected in step S3, the procedure proceeds to step S4. In step S4, it is judged whether or not four seconds have elapsed since the facsimile machine 20 transmits the ANSam signal. When NO is selected in step S4, the procedure returns to step S2, however, when YES is selected in step S4, the procedure proceeds to step S5. Further, when YES is selected in step S3, in step S11, a JM (Joint Menu) signal is transmitted by the facsimile machine 20 and the V. 8 mode is continued. Then, in step S12, the facsimile reception process is carried out in accordance with the V. 34 mode. Subsequently, in step S10, the line is released and the facsimile incoming call process is completed.

In step S5, the facsimile machine 20 transmits a DIS signal to which a V. 8 bit indicating that the communication procedure in accordance with the V. 8 mode can be carried out is set. Subsequently, in step S6, it is judged whether or not the facsimile machine 20 receives a CI signal, and when YES is selected, the procedure proceeds to step S21 in Figure 3, and when NO is selected, the procedure proceeds to step S7. Next, in step S7, it is judged whether or not a DCS signal is received by the facsimile machine 20, and when YES is selected, the procedure proceeds to step S32 in Figure 3, and when NO is selected, the procedure proceeds to step S8. In step S8, it is judged whether or not three seconds have elapsed since the DIS signal is transmitted, and when NO is selected, the procedure returns to step S6, and when YES is selected, the procedure proceeds to step S9. Furthermore, in step S9, it is judged whether or not the T1 timer has indicated the time limit, for example, 35 seconds have elapsed from the receiving of an incoming call. When NO is selected in step S9, the procedure returns to step S5, and when YES is selected in step S9, the procedure proceeds to step S13. After the facsimile machine 20 transmits a DCN (disconnect) signal, the line is released in step S10, and the facsimile incoming call process is completed.

On the other hand, in step S21 of Figure 3, the facsimile machine 20 transmits an ANSam signal, and in step S22, it is judged whether or not the facsimile machine 20 receives a CM signal. When YES is selected in step S22, the procedure proceeds to step S11 of Figure 2, and when NO is selected in step S22, the procedure proceeds to step S23. In step S23, it is judged whether or not four seconds have elapsed since the ANSam signal is transmitted, and when NO is selected, the procedure returns to step S22, and when YES is selected, the procedure proceeds to step S24. In step S24, the count regarding how many CI signals the facsimile machine 20 has received (or detects) is incremented by one, and in step S25, it is judged whether or not a CI signal has been received four times or more times. When NO is selected in step S25, the procedure returns to step S5 shown in Figure 2, and when YES is selected in step S25, the procedure proceeds to step S26. In step S26, the facsimile machine 20 transmits a DIS signal without setting a V. 8 bit which is a bit for indicating that the communication procedure in accordance with the V. 8 mode can be carried out. In step S27, it is judged whether or not the facsimile machine 20 receives a DCS signal, and when YES is selected, the procedure proceeds to step S32, and after carrying out the facsimile reception process in accordance with T.30 of ITU-T Recommendation, the line is released in step S31, and the facsimile incoming call process is completed.

On the other hand, when NO is selected in step S27, the procedure proceeds to step S28. In step S28, it is judged whether or not three seconds have elapsed since the DIS signal is transmitted, and when NO is selected, the procedure returns to step S27, and when YES is selected, the procedure proceeds to step S29. Next, in step S29, it is judged whether or not the T1 timer has indicated the time limit, and when NO is selected, the procedure returns to step S26, and when YES is selected, the procedure proceeds to step S30. After the facsimile machine 20 transmits a DCN signal, the line is released in step S31, and the facsimile incoming call process is completed.

As described above, according to the embodiment of the present invention, the main control unit 1 causes the facsimile machine 20 to transmit an ANSam signal (step S2 in Figure 2). Subsequently, when a CM signal cannot be detected within a prescribed period of time (NO in step S3 and YES in step S4), the facsimile machine 20 transmits a DIS signal to which a bit indicating that the communication procedure in accordance with the V. 8 mode can be carried out is set (step S5). Then, when the facsimile machine 20 receives a CI signal (YES in step S6), the main control unit 1 causes the facsimile machine 20 to transmit an ANSam signal (step S21 in Figure 3). Then, when a CI signal is detected a prescribed number of times or more times (YES in step S25) without detecting a CM signal within a prescribed period of time (NO in step 22 and YES in step 23), the main control unit 1 causes the facsimile machine 20 to transmit a DIS signal to which a bit indicating that the communication procedure in accordance with the V. 8 mode can be carried out is not set (step S26). Therefore, facsimile can be received from a facsimile machine which cannot receive an ANSam signal. In other words, even in the case where the facsimile communication following the communication procedure of the V. 8 mode cannot be continued, the communication error can be avoided, and the facsimile communication can be continued.

Moreover, the facsimile machine 20 receives a CI signal (YES in step S6 in Figure 2), and the main control unit 1 causes the facsimile machine 20 to transmit an ANSam signal (step S21 in Figure 3). Then, if a CM signal is not detected (step S22-S24), and in the case (NO in step S25) other than the case in which a CI signal is detected a prescribed number of times or more times, the main control unit 1 causes the facsimile machine 20 to transmit a DIS signal to which a bit indicating that the communication procedure in accordance with the V. 8 mode can be carried out is set (step S5 in Figure 2). Therefore, when it is judged that the facsimile communication in accordance with the communication procedure of the V. 8 mode can be continued, the mode returns to the V. 8 mode, and the facsimile communication following such communication procedure can be continued.

In the embodiment described above, description is directed to an example of the facsimile machine 20. However, the present invention is not limited to this example, and can be applied to communication terminal devices including a telephone set and a data communication device for example, which are connected to a public network such as a public switched telephone network or a public digital line network.

According to the aforementioned embodiment, in step S25 of Figure 3, it is judged whether or not a CI signal is received four times or more times. However, the present invention is not limited to this, and the facsimile machine 20 may be configured to judge whether or not a CI signal has been received a different prescribed number of times or more times (that is, the number is not limited to four). Also in this embodiment, the prescribed period of time in step 4 and step 23 is four seconds, but is not limited to this time, and a different prescribed period of time may be set.

As described above, according to the embodiment of the present invention, the communication terminal device with a facsimile communication function following the V. 8 mode of ITU-T Recommendation comprises communication control means. The communication control means causes the communication terminal device to transmit a DIS signal to which a bit indicating that communication procedure following the V. 8 mode can be carried out is set when a CM signal cannot be detected within a prescribed period of time after transmission of an ANSam signal. Subsequently, when the communication terminal device receives a CI signal, the communication control means causes the communication terminal device to transmit an ANSam signal. In this case, then when a CI signal is detected a prescribed number of times or more times without detecting a CM signal after transmitting the ANSam signal, the communication control means causes the communication terminal device to transmit a DIS signal to which a bit indicating that the communication procedure in accordance with the V. 8 mode can be carried out is not set. Therefore, facsimile can be received from a communication terminal device such as a facsimile machine which cannot receive an ANSam signal. In other words, even when the facsimile communication following the communication procedure of the V. 8 mode cannot be continued, the communication error can be prevented, and the facsimile communication can be continued.

Furthermore, According to the embodiment of the present invention, when the communication terminal device receives a CI signal, transmits an ANSam signal, and does not detect a CM signal, and then in the case other than the case in which a CI signal is detected a prescribed number of times or more times, the communication control means preferably causes the communication terminal device to transmit a DIS signal to which a bit indicating that the communication procedure in accordance with the V. 8 mode can be carried out is set. Therefore, when it is judged that the facsimile communication in accordance with the communication procedure of the V. 8 mode can be continued, the facsimile communication following this communication procedure can be continued by returning to the V. 8 mode.

Additionally, according to the embodiment of the present invention, the storing medium stores the communication control program including the process of the communication control means. By carrying out the communication control program stored in this storing medium, facsimile can be received from a communication terminal device such as a facsimile machine which cannot receive an ANSam signal. In other words, even when the facsimile communication in accordance with the communication procedure of the V. 8 mode cannot be continued, the communication error can be avoided, so that the facsimile communication can be continued. In addition, the communication control program may include various codes for respective processes.

## Claims

1. A communication terminal device (20) with a facsimile communication function in accordance with a V. 8 mode of ITU-T Recommendation, comprising:
a communication control unit (1) for causing the communication terminal device to transmit a first type of DIS signal to which a bit indicating that a communication procedure in accordance with the V. 8 mode can be carried out is set, when the communication terminal device transmits a first ANSam signal, and cannot detect a CM signal within a prescribed period of time, and then causing to the communication terminal device to transmit a second type of DIS signal to which a bit indicating that the communication procedure in accordance with the V. 8 mode can be carried out is not set, in a case in which after transmission of the first type DIS signal, the communication terminal device receives a CI signal, and transmits a second ANSam signal, and does not detect a CM signal, and it is judged that the number of CI signals the communication terminal device has detected is equal to, or more than, a prescribed number.

2. The communication terminal device (20) according to claim 1, **characterized in that** the communication control unit (1) causes the communication terminal device to transmit a first type of DIS signal to which a bit indicating that the communication procedure in accordance with the V. 8 mode can be carried out is set, in a case other than a case in which it is judged that the number of CI signals the communication terminal device has detected is equal to, or more than, the prescribed number when the communication terminal device receives the CI signal, and transmits the second ANSam signal, and does not detects the CM signal,.

3. The communication terminal device (20) according to claim 1 or 2, **characterized in that** when the communication terminal device detects the CM signal within the prescribed period of time after transmission of the first or second ANSam signal, the communication control unit (1) causes the communication terminal device to transmit a JM signal, the V.8 mode is continued, and a facsimile reception process in accordance with a V.34 mode is carried out.

4. The communication terminal device (20) according to claim 1, 2 or 3,
**characterized in that** the communication terminal device further possesses a facsimile communication function of a G3 method, and
that when the communication terminal device receives a DCS signal after transmission of the first or second type of DIS signal, a facsimile reception process in accordance with T.30 of the ITU-T Recommendation is carried out.

5. The communication terminal device (20) according to any one of claims 1 to 4, **characterized in that** the communication terminal device (20) further includes:
an operation unit (5) for operating the communication terminal device;
a faxmodem (10);
a network control unit (11) for connecting the faxmodem (10) to a public network in accordance with necessity;
a ROM (6) for storing a program to be executed by the communication control unit (1);
a RAM (7) for storing temporary data which is generated when the communication control unit (1) executes the program stored in the ROM (6);
an image reading unit (2) for reading an image;
an image memory (8) for storing the read image to be transmitted, and an image the communication terminal device has received; and
an image recording unit (3) for recording at least said received image.

6. The communication terminal device (20) according to claim 5,
**characterized in that** the communication terminal device (20) further includes a CD-ROM drive device into which a CD-ROM which has stored a communication control program can be inserted, and
that the communication control program stored in the CD-ROM can be loaded onto the RAM (7).

7. The communication terminal device (20) according to claim 5 or 6, **characterized in that** the communication terminal device (20) further includes a display unit (4) for displaying operational condition of the communication terminal device.

8. The communication terminal device (20) according to claim 5, 6 or 7, **characterized in that** the public network is a public switched telephone network or a public digital line network.

9. A communication terminal device (20) with a facsimile communication function in accordance with a V. 8 mode of ITU-T Recommendation, comprising:
communication control means (1) for causing the communication terminal device to transmit a first type of DIS signal to which a bit indicating that a communication procedure in accordance with the V. 8 mode can be carried out is set, when the communication terminal device transmits a first ANSam signal, and cannot detect a CM signal within a prescribed period of time, and then causing to the communication terminal device to transmit a second type of DIS signal to which a bit indicating that the communication procedure in accordance with the V. 8 mode can be carried out is not set, in a case in which after transmission of the first type DIS signal, the communication terminal device receives a CI signal, and transmits a second ANSam signal, and does not detect a CM signal, and it is judged that the number of CI signals the communication terminal device has detected is equal to, or more than, a prescribed number; and
means (11) for connecting the communication terminal device to a public network.

10. The communication terminal device (20) according to claim 9, **characterized in that** the communication control means (1) causes the communication terminal device to transmit a first type of DIS signal to which a bit indicating that the communication procedure in accordance with the V. 8 mode can be carried out is set, in a case other than a case in which it is judged that the number of CI signals the communication terminal device has detected is equal to, or more than, the prescribed number when the communication terminal device receives the CI signal, and transmits the second ANSam signal, and does not detects the CM signal.

11. The communication terminal device (20) according to claim 9 or 10, **characterized in that** the communication terminal device (20) further includes:
means (6) for operating the communication terminal device;
first storing means (6) for storing a program to be executed by the communication control means (1);
second storing means (7) for storing temporary data which is generated when the communication control means (1) executes the program stored in the first storing means;
means (2) for reading an image;
means (8) for storing the read image to be transmitted, and an image the communication terminal device has received; and
means (3) for recording at least said received image.

12. The communication terminal device (20) according to claim 11, **characterized in that** the communication terminal device (20) further includes means (4) for displaying operational condition of the communication terminal device.

13. The communication terminal device (20) according to any one of claims 9 to 12, **characterized in that** the public network is a public switched telephone network or a public digital line network.

14. A facsimile communication method in accordance with a V. 8 mode of ITU-T Recommendation, comprising the steps of:
transmitting a first ANSam signal;
transmitting a first type of DIS signal to which a bit indicating that a communication procedure in accordance with the V. 8 mode can be carried out is set, if a CM signal cannot be detected within a prescribed period of time after transmission of the first ANSam signal;
transmitting a second ANSam signal if a CI signal is received after transmission of the first type of DIS signal; and
transmitting a second type of DIS signal to which a bit indicating that a communication procedure in accordance with the V. 8 mode can be carried out is not set, if a CM signal cannot be detected after transmission of the second ANSam signal, and the number of detected CI signals is equal to, or more than, a prescribed number.

15. The communication method according to claim 14, **characterized in that** said method further includes the step of:
transmitting a first type of DIS signal to which a bit indicating that the communication procedure in accordance with the V. 8 mode can be carried out is set, and in a case other than a case in which the number of detected CI signal is equal to, or more than, the prescribed number when the CM signal cannot be detected after the transmission of the second ANSam signal.

16. The communication method according to claim 14 or 15, **characterized in that** said step further includes the steps of:
transmitting a JM signal if the CM signal is detected;
continuing the V.8 mode thereafter; and
carrying out a facsimile reception process in accordance with a V.34 mode.

17. The communication method according to claim 14, 15 or 16, **characterized in that** said step further includes the step of carrying out a facsimile reception process in accordance with T.30 of the ITU-T Recommendation if a DSC signal is received after transmission of the first or second type of DIS signal.

18. A storing medium storing a communication control program to be executed by communication control means of a communication terminal device,
**characterized in that** said communication control program includes:
a first program code for causing a communication terminal device to transmit a first ANSam signal;
a second program code for causing the communication terminal device to transmit a first type of DIS signal to which a bit indicating that the communication procedure in accordance with the V. 8 mode can be carried out is set, if a CM signal cannot be detected within a prescribed period of time after transmission of the first ANSam signal;
a third program code for causing the communication terminal device to transmit a second ANSam signal if a CI signal is received after transmission of the first type of DIS signal; and
a fourth program code for causing the communication terminal device to transmit a second type of DIS signal to which a bit indicating that a communication procedure in accordance with the V. 8 mode can be carried out is not set, if a CM signal cannot be detected after transmission of the second ANSam signal, and the number of detected CI signals is equal to, or more than, a prescribed number.

19. The storing medium according to claim 18, **characterized in that** said communication control program further includes a fifth program code for causing the communication terminal device to transmit a first type of DIS signal to which a bit indicating that the communication procedure in accordance with the V. 8 mode can be carried out is set, in a case other than a case in which the number of detected CI signals is equal to, or more than, the prescribed number when the CM signal cannot be detected after the transmission of the second ANSam signal.

20. The storing medium according to claim 18 or 19, **characterized in that** the storing medium is an optical disk or a floppy disk.
